Europäisches Patentamt

European Patent Office

Office européen des brevets

(11) Veröffentlichungsnummer: **0 088 902**

**A2**

(12) **EUROPÄISCHE PATENTANMELDUNG**

(21) Anmeldenummer: **83101503.7**

(22) Anmeldetag: **17.02.83**

(51) Int. Cl.³: **B 23 D 57/00**
**B 28 D 5/04**

(30) Priorität: **13.03.82 DE 3209164**

(43) Veröffentlichungstag der Anmeldung:
**21.09.83 Patentblatt 83/38**

(84) Benannte Vertragsstaaten:
**AT BE CH DE FR GB IT LI LU NL SE**

(71) Anmelder: **Messner, Caspar O.H., Prof. Dr. sc. techn.**
**Stauffacherquai 40**
**CH-8004 Zürich(CH)**

(72) Erfinder: **Ebner, Walter**
**Grande Rue 3**
**CH-2400 Le Locle(CH)**

(74) Vertreter: **Troesch, Hans Alfred, Dr. Ing. et al,**
**Walchestrasse 19**
**CH-8035 Zürich(CH)**

(54) **Drahtsäge.**

(57) Es soll eine Drahtsäge geschaffen werden, welche im Aufbau einfach ist, praktisch Werkstücke jeder Dimension mühelos bearbeiten kann und trotzdem geringen Platz beansprucht. Eine solche Drahtsäge (3), insbesondere im allgemeinen mit Diamantsplitterbelegung des vor- und rückwärtsbewegten Sägedrahtes (20), weist zwei auf je einer Welle (13) angeordnete, mit gewindeähnlicher Rille (19) versehene Spulen (14) zur Aufnahme des endlichen Sägedrahtes (20) auf. Jede Spule (14) ist mit einem Drehantrieb in form eines Motors (12) verbunden. Zwischen den Spulen (14) befindet sich der Sägeort. Die beiden Motoren (12) sind bezüglich Drehrichtung und Drehzahl synchronisiert.

FIG. 1

EP 0 088 902 A2

- 1 -

<u>Drahtsäge</u>

Die vorliegende Erfindung betrifft eine Drahtsäge mit Schneidmittelbelag, insbesondere des vor- und rückwärtsbewegten Sägedrahtes, mit einer auf einer Welle oder Achse angeordneten, mit gewindeähnlicher Rille versehenen, in Richtung ihrer Längsachse verschiebbaren, mit einem Drehantrieb verbundenen Spule zur Aufnahme des endlichen Sägedrahtes sowie mit einem der Spule gegenüberliegenden, parallelachsigen Drahthalter, wobei sich zwischen Spule und Drahthalter der Sägeort befindet.

Das gebräuchliche Antriebssystem für Drahtsägen, insbesondere Diamantdrahtsägen, umfasst im wesentlichen einen Antriebsmotor, der eine drahtaufnehmende Spule antreibt und eine parallel dazu angeordnete gegenüberliegende Rolle, auf welcher der Draht unter Spannung gehalten und geführt wird. Bei diesem Antriebssystem, bei welchem die freien Drahtenden auf der mit gewindeähnlicher Rille versehenen Spule befestigt werden und bei deren Drehen der Draht ab- bzw. aufgewickelt wird, während an der Umlenkstelle die mit einer Rille versehene Rolle angeordnet ist, wird, wie bei einer Bandsägemaschine mit dem einen Trum, das sich in der einen Richtung bewegt, das Sägen durchgeführt, während das andere Trum insbesondere dann störend wirkt, wenn grössere Werkstücke, die sich über den Abstand der beiden Trums erstrecken, bearbeitet werden sollen.

Dieser sich in praxi ergebende Nachteil wurde bisher dadurch vermieden, dass durch Anordnen zusätzlicher Umlenkrollen der Abstand des arbeitenden Trums vom rückkehrenden Trum wesentlich vergrössert wurde.

Diese Lösung ist indessen materiell recht aufwendig und führt zu teuren platzsperrenden Drahtsägen.

Die vorliegende Erfindung bezweckt die Schaffung einer einfacheren Drahtsäge, welche die eingangs erwähnten Nachteile auch für grössere Werkstücke nicht aufweist und trotzdem sowohl im Betrieb als auch herstellungstechnisch einfacher und billiger ist und die sich insbesondere auch zum Ausschneiden von Formen eignet.

Eine derartige Drahtsäge zeichnet sich dadurch aus, dass der Drahthalter mindestens eine weitere in Richtung ihrer Längsachse verschiebbare Spule mit gewindeähnlicher Rille aufweist, die mit dem Drehantrieb bezüglich Drehrichtung und Drehzahl synchronisiert ist, wobei Mittel vorgesehen sind, um entsprechend die gerillten Spulen in entgegengesetzter Richtung zur achsialen Drahtverschiebung zu verschieben und die Schneidebene des Drahtes bezüglich des Werkstückes beizubehalten.

Die Erfindung wird beispielsweise anschliessend anhand einer Zeichnung erläutert.

Es zeigen in rein schematischer Darstellung:

Fig. 1   einen Schnitt durch einen Ausschnitt aus einer Sägeanlage,

Fig. 2   eine perspektivische Darstellung der den Sägedraht tragenden Spulen der Anlage nach Fig. 1,

Fig. 3   eine mögliche Anordnung der Spulen, welche beide rechtsgängige oder linksgängige Gewinde tragen,

Fig. 4    eine andere Anordnung, bei welcher die eine
          Spule Rechts-,die andere Linksgewinde trägt,

Fig. 5    eine weitere Anordnung der Spulen mit optimaler Ausnützung des Sägedrahtes,

Fig. 6    eine Anordnung mit auf schwenkbaren Armen festgehaltenen Spulen,

Fig. 7    eine Anordnung mit selbsthemmenden Getriebemotoren,

Fig. 8    eine weitere Anordnung einer Sägeeinrichtung
          mit feststehenden Wellen und auf diesen hin-
          und herbewegbaren Spulen.

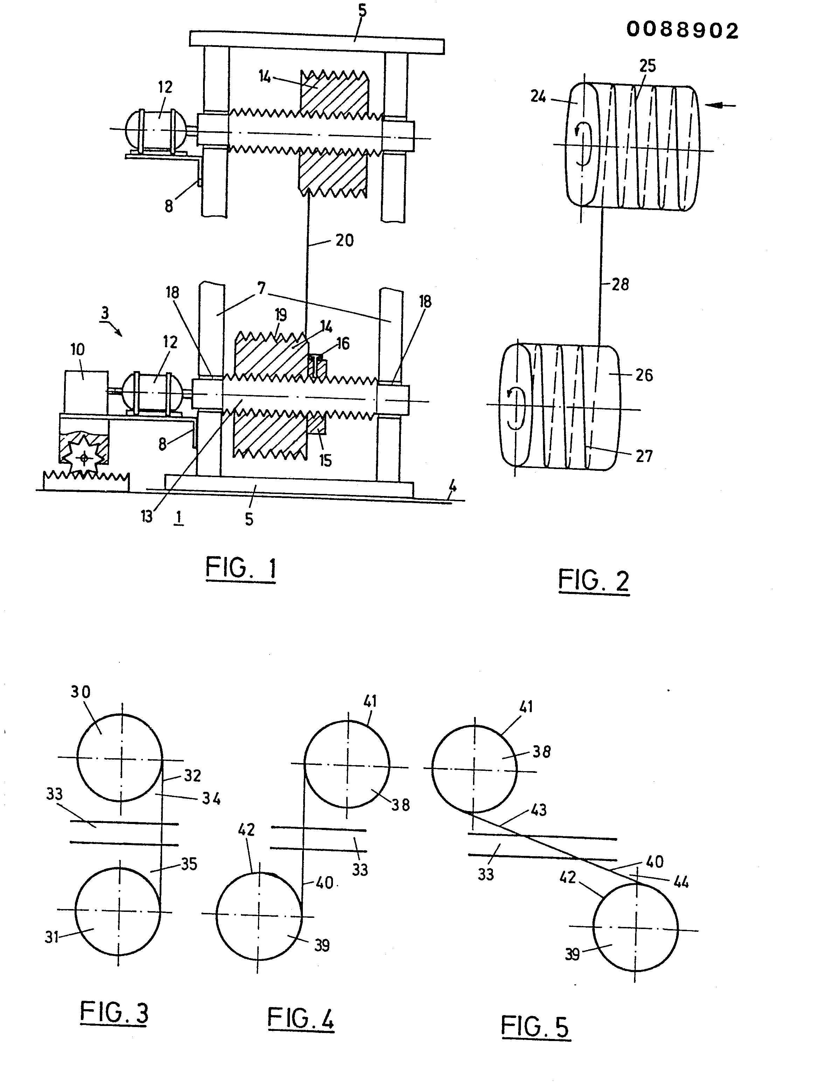

Die in Fig. 1 dargestellte Drahtsäge 3 weist einen
Arbeitstisch 1 mit einer Gleitbahn 4 und einem Schlitten 5 auf, auf dem ein Rahmen 7 angeordnet ist. Auf der
einen Seite des Rahmens 7 befindet sich eine Konsole 8.
Mit dem Schlitten 5 verbunden ist ein Schiebeantrieb 10,
beispielsweise inform eines Zahnstangentriebes, wobei
der Antrieb des Ritzels durch den Motor 12 über einen
Winkeltrieb erfolgen kann. Auf der Konsole 8 ist ein
Sägeantriebsmotor 12 befestigt, welcher eine Welle 13
treibt, auf der sich eine Drahtführungsspule 14 befindet. Diese Spule ist mittels eines Bundes 15 und einer
Wurmschraube 16 drehfest mit der Welle 13 verbunden.
Die Welle ist in zwei Wellenlagern 18 gelagert. Die
Drahtführungsspule 14 ist mit äussern Gewindegängen 19
versehen.

Ueber diesem Teil der Maschine ist hängend verschiebbar im gleichen Maschinengestell ein gegenüberliegender Teil gleichen Aufbaus vorgesehen. Die beiden Antriebsmotoren 12 sind synchronisiert, so dass der Sägedraht ohne zusätzliche Spannungen infolge ungleicher Drehzahlen bei gleichen Spulendurchmessern und gleichen Gewinden das Werkstück sägt. Die beiden freien Enden des Sägedrahtes 20 sind auf den beiden Spulen 14 befestigt, derart, dass beim synchronen Drehen der beiden Spulen der Draht 20 von der einen Spule abgewickelt und von der anderen aufgewickelt wird. Während dieses Auf- bzw. Abwickelns werden durch die ebenfalls synchronisierten Zahnstangentriebe 10 bei der einen Drehrichtung die beiden Spulen gegeneinander und bei der anderen Drehrichtung voneinander wegbewegt, derart, dass der Sägedraht 20 sich einmal von oben nach unten und dann von unten nach oben bewegt. Die Pfeile, ausgezogen und strichpunktiert, geben die jeweils zugehörigen Bewegungsrichtungen der Spulen an, welche derart sind, dass der Sägedraht 20 bezüglich des Werkstückes in ein- und derselben Sägeebene bleibt, welche Sägeebene senkrecht zur Papierebene der Fig. 1 verläuft. Das Umschalten kann über elektrische Grenzkontakte erfolgen. Für den Antrieb der beiden Spulen können z.B. zwei Servo-Gleichstrommotoren mit 4-Quadranten-Leistungsstufe verwendet werden. Es ist auch möglich, eine Spule auf einer glatten Welle zu befestigen und dieses Gebilde entsprechend hin und her bzw. her und hin zu bewegen, um die Schnittebene stets am gleichen Ort zu halten.

Zwecks einfacheren Verstehens ist in perspektivischer Darstellung in Fig. 2 eine obere Spule 24 mit Rechtsgewinde 25 und eine untere Spule 26 mit Rechtsgewinde 27 ersichtlich, zwischen denen der an seinen Enden an den Spulen befestigte Sägedraht 28 auf- bzw. abgewickelt wird.

Die Fig. 3, 4 und 5 zeigen unterschiedliche Anordnungen. So ist in Fig. 3 eine obere Spule 30 und eine untere 31 dargestellt, mit dazwischenliegendem Sägedraht 32 und dem Werkstück 33. Hier entstehen zwei tote Räume 34 und 35, über deren Höhe der Sägedraht 32 nicht zum Einsatz gelangen kann. Diese Anordnung arbeitet mit zwei Spulen mit gleicher Drehrichtung der Gewinde, also mit zwei Rechtsgewinden bzw. Linksgewinden. Diese Anordnung dürfte die geringste Wechselbelastung auf den Draht ausüben und somit dessen Lebensdauer erhöhen.

In Fig. 4 erfolgt das Auf- bzw. Abspulen des Drahtes durch eine obere Spule 38 und eine untere Spule 39 mit dazwischenliegendem Sägedraht 40. Die obere Spule ist beispielsweise mit Rechtsgewinde und die untere mit Linkgsgewinde 42 versehen.

Schiebt man die Spulen gemäss Fig. 4 auseinander, so entsteht die Anordnung gemäss Fig. 5, in welcher der tote Raum 43 bzw. 44 minimalisiert wird. Die Länge des Sägedrahtteiles, welcher zum Sägen kommt, ist hier wesentlich grösser als bei den Ausführungen nach den Fig. 3 und 4. Die Führung des Sägedrahtes ist hier bis vor die Werkstückkanten möglich.

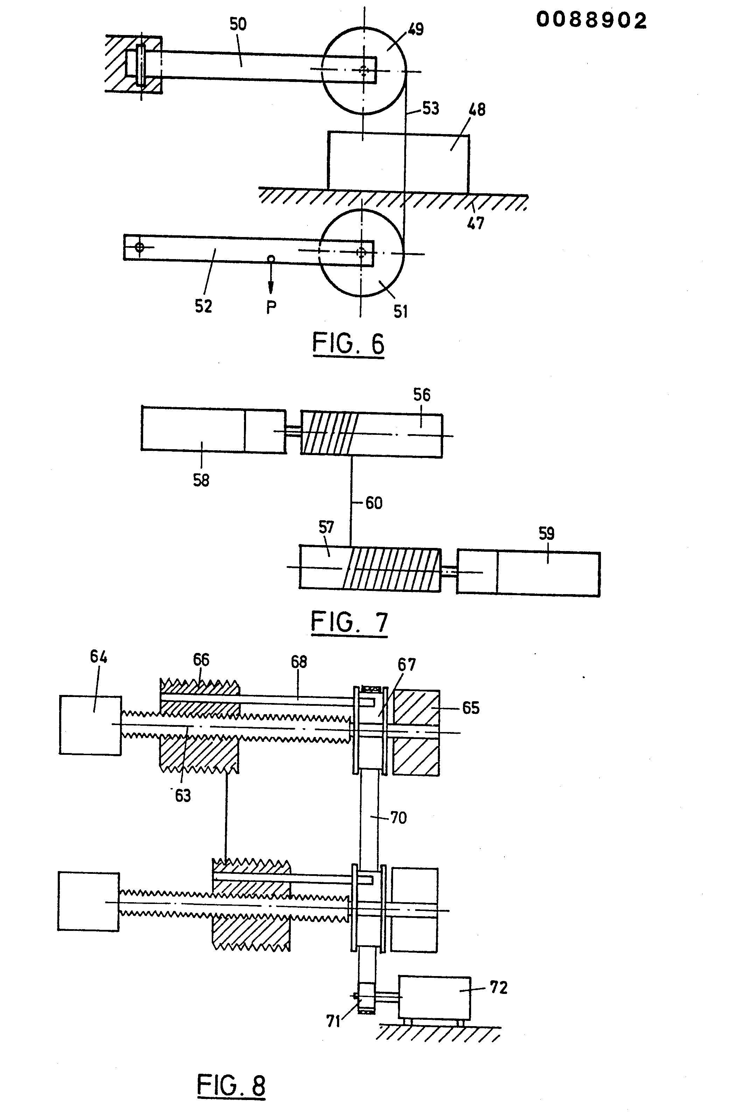

In Fig. 6 ist eine etwas andere Anordnung vorgesehen, bei welcher ein Werktisch 47 zur Aufnahme eines Werkstückes 48 vorgesehen ist. Eine obere Spule 49 ist in einem Arm 50, der horizontal schwenkbar angeordnet ist, drehbar festgehalten, während die untere Spule 51 an einem vertikal schwenkbaren Schwenkarm 52 befestigt ist.

Ein Sägedraht 53 läuft über die beiden Spulen 49 und 51. Durch das Anbringen eines Gewichtes P wird die zum Sägen erforderliche Sägedrahtspannung erzeugt. Dieses Gewicht P kann verschiebbar auf dem Schwenkarm 52 angeordnet sein, was ermöglicht, die Vorwahl der Spannung dem zu sägenden Werkstück anzupassen.

In Fig. 7 sind eine obere Spule 56 und eine untere Spule 57 ersichtlich, welche je über einen Getriebemotor 58 und 59 angetrieben werden. Dazwischen liegt ein Sägedraht 60. Diese Anordnung hat den Vorteil, dass keine spezielle Sperre vorgesehen werden muss, um ein unbeabsichtigtes Abwickeln des Drahtes, insbesondere in den Umkehrphasen der Drehrichtung, zu verhüten; denn ein Getriebemotor ist selbstsperrend.

Bei Verwendung der zwei synchronisierten Spulen wirkt auf den sägenden Teil des Drahtes zwischen den beiden Spulen eine einstellbare, gleichbleibende, bis an die Grenzbelastung gehende Spannung. Dies wirkt sich in jeder Beziehung günstig auf den Sägevorgang aus.

Anstelle von Getriebemotoren können selbstverständlich entsprechende Bremsen vorgesehen werden, welche ein derartiges unbeabsichtigtes Abwickeln verhüten.

Damit sich in abgeschaltetem Zustand der Draht nicht von selbst abrollt, kann auch entweder ein Bremsmotor verwendet werden, der stromlos ein Drehen der Spule vermeidet oder sonst eine elektromagnetische Sicherung, die das Abrollen des Drahtes vermeidet und erst unter Spannung öffnet.

Fig. 8 zeigt eine weitere Ausführung einer derartigen Drahtsäge. Eine obere Gewindeachse 63 ist in zwei Lagern 64 und 65 drehfest gehalten, während eine Spule 66, welche sowohl in der Bohrung als auch aussen die genau gleichen Gewinde aufweist wie die Gewindeachse 63, auf dieser Achse 63 achsial verschiebbar und drehbar angeordnet ist. Die Spule 66 wird über Mitnehmer 68 von einer Zahnscheibe 67 mit einem Zahnriemen 70 mittels eines Antriebsmotors 72 und über ein Ritzel 71 angetrieben. Dieser Zahnriemen 70 treibt gleichzeitig eine analoge Anordnung mit Gewindeachse, Lager, Spule und Zahnscheibe. Die Drehrichtungen der beiden Spulen müssen, sofern beide Rechtsgewinde aufweisen, unterschiedlich sein.

Bei gleicher Drehrichtung muss die eine Spindel 63 Rechts-, die andere Spindel 63 Linksgewinde aufweisen. Die Wahl des Spulendurchmessers 2a hängt u.a. von der zur Verfügung stehenden elektromagnetischen Kraft im Motor ab. Die Sägedrahtspannung wird durch Gewichte, Federkräfte oder Elektromagnete erzeugt.

Sind die zwei Spulen in einem gemeinsamen Rahmen angeordnet, so kann dieser als Ganzes hin und her bewegt werden, um den Sägedraht zwischen den beiden Spulen bei unbeweglichem Werkstück in seiner Sägeebene zu belassen.

Der Antrieb für die Hin- und Herbewegung kann auch elektromagnetisch (Schrittmotor), hydraulisch oder pneumatisch erfolgen.

Die beispielsweise dargestellten Ausführungen können auch miteinander kombiniert werden.

Patentansprüche:

1. Drahtsäge mit Schneidmittelbelag, insbesondere mit Diamantsplitterbelag des vor- und rückwärtsbewegten Sägedrahtes, mit einer auf einer Welle oder Achse angeordneten, mit gewindeähnlicher Rille versehen, in Richtung ihrer Längsachse verschiebbaren, mit einem Drehantrieb verbundenen Spule zur Aufnahme des endlichen Sägedrahtes sowie mit einem der Spule gegenüberliegenden, parallelachsigen Drahthalter, wobei sich zwischen Spule und Drahthalter der Sägeort befindet, dadurch gekennzeichnet, dass der Drahthalter mindestens eine weitere in Richtung ihrer Längsachse verschiebbare Spule mit gewindeähnlicher Rille aufweist, die mit dem Drehantrieb bezüglich Drehrichtung und Drehzahl synchronisiert ist, wobei Mittel vorgesehen sind, um entsprechend die gerillten Spulen in entgegengesetzter Richtung zur achsialen Drahtverschiebung zu verschieben und die Schneidebene des Drahtes bezüglich des Werkstückes beizubehalten.

2. Drahtsäge, vorzugsweise nach mindestens einem der Ansprüche, dadurch gekennzeichnet, dass zwei drahtaufnehmende, gleich- oder gegensinnige angetriebene Spulen angeordnet sind, welche synchron, vorzugsweise elektrisch, z.B. mittels zweier Elektromotoren, angetrieben sind.

3. Drahtsäge, vorzugsweise nach mindestens einem der Ansprüche, dadurch gekennzeichnet, dass beide Spulen auf ihrer Welle oder Achse längs dieser bzw. in deren Längsrichtung verschiebbar angeordnet sind.

4. Drahtsäge, vorzugsweise nach mindestens einem der Ansprüche, dadurch gekennzeichnet, dass die Spule eine Gewindebohrung und die Achse ein analoges Aussengewinde aufweist, wobei die Spulenrille und die beiden Gewinde gleiche Steigung aufweisen und die Spule einen Antrieb aufweist, welcher vorzugsweise mit der Spule über Mitnehmer verbunden ist und ein achsiales Verschieben der Spule auf der Welle ermöglicht.

5. Drahtsäge, vorzugsweise nach mindestens einem der Ansprüche, dadurch gekennzeichnet, dass der Sägedraht und die Werkstückauflagefläche einen spitzen Winkel bilden (Fig. 5).

6. Drahtsäge, vorzugsweise nach mindestens einem der Ansprüche, dadurch gekennzeichnet, dass ein weiterer Antrieb, z.B. ein Zahnstangentrieb, vorgesehen ist, um die Welle mit der Spule und ihren Antriebsmitteln synchron mit diesen hin und her zu bewegen.

7. Drahtsäge, vorzugsweise nach mindestens einem der Ansprüche, dadurch gekennzeichnet, dass beide Spulen von je einem Getriebemotor angetrieben sind, wobei vorzugsweise Spule und Welle aus einem Teil bestehen.

8. Drahtsäge, vorzugsweise nach mindestens einem der Ansprüche, dadurch gekennzeichnet, dass Spulen mit ihren Antrieben je an einem Schwenkhebel angeordnet sind, wobei die eine Schwenkachse parallel und die andere rechtwinklig zu den Spulendrehachsen angeordnet sind und vorzugsweise der eine Hebel durch eine veränderbare Kraft belastbar ist, um den Sägedraht zu spannen.

9. Drahtsäge, vorzugsweise nach mindestens einem der Ansprüche, gekennzeichnet durch einen für die auf den Achsen angeordneten Spulen gemeinsamen Zahnriementrieb.

10. Drahtsäge, vorzugsweise nach mindestens einem der Ansprüche, dadurch gekennzeichnet, dass die beiden gerillten Spulen auf getrennten Wellen in einem gemeinsamen Rahmen angeordnet sind und Antriebsmittel vorgesehen sind, um den Rahmen entsprechend der Steigung der schraubenförmigen Rillen hin und her zu schieben.

0088902

FIG. 1

FIG. 2

FIG. 3     FIG. 4     FIG. 5

0088902

FIG. 6

FIG. 7

FIG. 8